# EUROPEAN PATENT SPECIFICATION

(11) **EP 1 203 498 B1**
(45) Date of publication and mention of the grant of the patent: **19.12.2007**
(21) Application number: 01929677.1
(22) Date of filing: 19.04.2001
(51) Int. Cl.: H04Q 3/00

(54) **FORMING A COMMUNICATION NETWORK**
BILDUNG EINES KOMMUNIKATIONSNETZES
CREATION D'UN RESEAU DE COMMUNICATION

(30) Priority: 31.05.2000 FI 20001312
(43) Date of publication of application: 08.05.2002
(73) Proprietor: Nokia Corporation, 02150 Espoo (FI)
(72) Inventor: KORPELA, Harri, FIN-02660 Espoo (FI); NURMINEN, Jukka, FIN-02130 Espoo (FI); AKKANEN, Jyrki, FIN-Espoo 02130 (FI)
(74) Representative: Ruuskanen, Juha-Pekka
(86) International application number: PCT/FI2001/000382
(87) International publication number: WO 2001/093602

(56) References cited:
- US-A- 5 515 367
- US-A- 5 903 731
- US-A- 5 974 127

## Description

### Field of the Invention

This invention concerns the forming of a communication network.

### Background of the Invention

By viewing a process targeted to form a communication network, it is worth noticing how complex a task it is. For example, in a process of forming a cellular network many items have to be taken care of. Base stations and mobile switching centers are located into a geographical area, radio coverage areas must be defined, equipment are chose and configured, line-of-sight (free air space between two sites) information has to be examined concerning radio links, paths of 2Mbit/s frames and virtual containers are created, and any existing network is taken into account, just to mention a few. Future growth of the network must also be taken into account.

For example, a cellular network can be thousands of links in size, and there can be several technologies in the network. The process of forming a network is very much an iterative process where many interrelated decisions must be made. Often the process hits a dead end. Usually manual work which is error-prone, is needed to set up parameters for each piece of equipment in the network. As a consequence, errors cause delays in the process under way. Sometimes penalties for missing the agreed deadlines have to be paid. Often the whole network is not formed at the same time but the network expands with time. To take care of the whole process for forming a cellular network is a difficult task. Attention must be paid to the expansion of the network. At present, there are many parallel arrangements to handle the process and expansion of a network. Often manual work is needed. Still, there is no single, suitable arrangement to handle both the process and expansion of a network. The objective of the invention is to alleviate the drawbacks of the known solutions. This is achieved in a way described in the claims.

US5974127 discloses a method and system for planning a future telecommunications network from an existing telecommunications network interconnecting a plurality of users utilizing an input device for determining future demands for the future telecommunications network. A processor then determines future characteristics of a plurality of loops connecting each of the users to a central office based on the future demands.

US5515367 discloses a method for use in cooperation with a computer having memory in a Synchronous Optical Network (SONET) for generating an optimized transition plan for the placement of Self-Healing Rings (SHR) and the routing of point-to-point demand in accordance with projected customer demand over a selected multi-period time interval. By determining the number of nodes within a SONET, the demand therebetween over selected time interval as well as the discounted add-drop cost for a plurality of selected Add-Drop Multiplexers (ADMs), a set of logical rings as well as a set of physical rings and detailed routing information may be obtained and graphically illustrated. US5903731 discloses a re-engineering method for standardizing data processing in a communication network while maintaining user services. Data channels between communicating network data processing components are made unnecessary by systematically providing bypass data paths. The data on each bypass, transparent to its terminating operational components, is routed through a network manager communicating in a standardized protocol. The manager thereby provides centralized control of data communications and provides standardized object oriented data representations and protocols.

### Summary of the Invention

Accordingly the invention offers an arrangement and a method to form a communication network, as defined in the appended claims. It is convenient to think of a network as layers on top of one another, each layer representing a specific task area of the network. The inventive arrangement is divided into several modules, such as a logical or physical topology of the network concerning a specific technology, where each one of them represents one layer of the network. Depending on the network that is going to be formed, the necessary modules are used, i.e. the set of modules is chosen to form the network. Certain network parts are formed in a relevant module. Each module uses resources (capacities and routes for connections) from the module below, i.e. a module that represents the layer below, and provides recourses to the module above, i.e. a module that represents the layer above. Hence the resource flow is from a module to an adjacent module only, intermediate modules are not bypassed. The possibility to exclude intermediate modules allows an incremental forming process. It is possible to develop an initial network with just two basic layers (for example logical connections and line systems), and gradually redefine the network by adding more network layers.

### Brief Description of the Drawings

In the following the invention is described in more detail by mean of Figures 1 - 3 in the attached drawings where,
- Figure 1: illustrates different network layers,
- Figure 2a: shows an example of the use of a conduit layer,
- Figure 2b: shows an example of the use of a line systems layer,
- Figure 3: shows an example of a set of modules.

### Detailed Description of the Invention

In order to deal with complex communication networks the inventive arrangement comprises several modules (each module representing a specific layer) for forming certain tasks of the communication network. There are: conduit; line system; VC-4; 2Mbit/s; ATM link; ATM virtual path; ATM virtual circuit; IP; WDM; and cellular module, just to mention a few. There exist many other modules as well, and new modules are going to be created when new technologies are taken into use. Which modules are used depends on the network to be formed.

It is convenient to think of a network as layers on top of one another, each layer representing a specific task area of the network. The set of layers (modules) used depends on two aspects. First, layers correspond to different technical solutions. A technical definition therefore dictates what layers are needed. For example, the use of ATM with inverse multiplexing over PDH radio links directly leads to the need to use ATM modules and PDH modules. In other words, the modules represent different layers of a network. Likewise, modeling the interswitch traffic over SDH transport links leads into the use of ISW (interswitching), VC-4, line systems, and conduit modules.

The other guiding factor is the accuracy of the planning. In general, the more accurate the results are needed, the more modules are needed. For rough forming only a few modules are enough to get an overall understanding of the network behavior. Each module adds their own level of detail, so more modules are needed if the goal is network deployment, which requires the exact configuration setting for each piece of equipment and cross-connection.

A process of forming a network often takes into account different technical solutions. Therefore frequently the same upper level traffic and modules are used but the lower level modules can be changed when comparing different solutions. In this way it is possible to calculate the same network with e.g. SDH over fiber and with WDM implementation, and compare the costs of the solutions.

Each module comprises nodes and links between nodes, describing special node and link types of each layer. A single node can be described as a base station in the cellular module, an access node in the transport module, and an "Ultrasite" (the product name) node in the detail module, for example. Each module also comprises layer specific calculation and routing methods, such as calculating circuit switched traffic, or how routes are directed through different layers. Generally, the term routing describes choosing a data stream path (connection) between two endpoints. In this text routing also means a process to route the whole network or a specific network part, i.e. to route all data streams in a network or in a specific network part. Further, each layer and module comprises specific tasks, such as generation of cross-connections in the detail module.

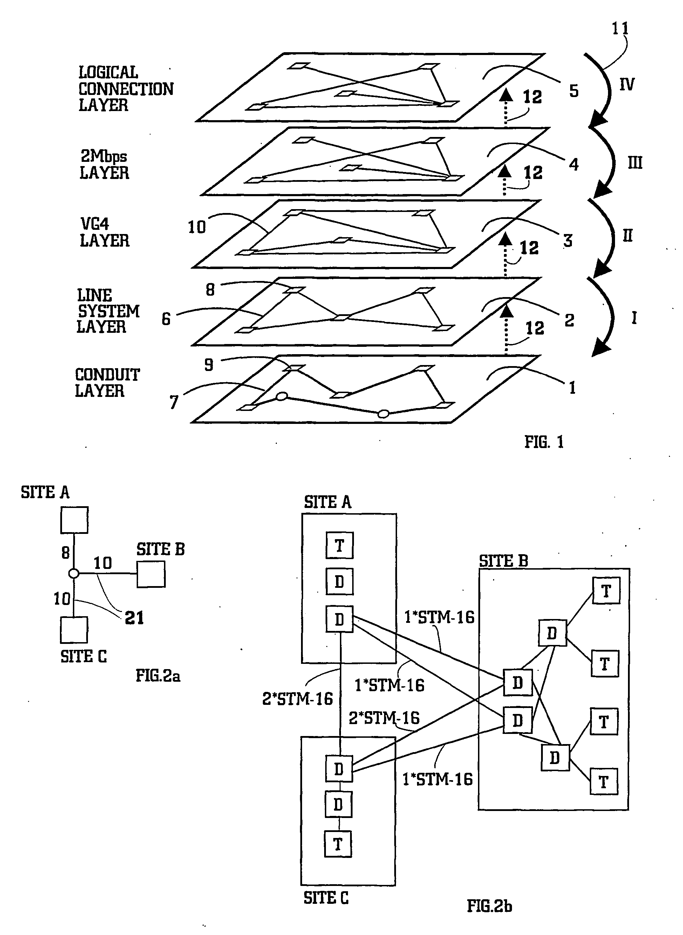

As mentioned, it is convenient to think of the communication network as layers on top of one another. An example of a cellular network of 5 different layers is shown in Figure 1. The conduit layer (1) carries the line systems (such as STM-4 or STM-16 equipment and routes), which are defined in the line system layer (2). Every line system link (6) (such as 2 Mbit/s frames in radio link or STM containers) must have a conduit route (7) (a conduit may carry many line system links). Every line system node (8) must be located at a conduit layer node (9). Figures 2a and 2b show more detailed examples of conduit and line systems layers. The numbers beside the conduits (21) tell the number of fibres in the conduits. Figure 2b depicts equipment types in the sites and line systems used. 1*STM-16 takes 2 fibers in the representing conduit in the conduit layer.

The line system layer carries virtual containers (VC-4s), forming the SDH High-Order links (10) (Figure 1) in the VC-4 layer (3). Every VC-4 link must have a line system link (6). Notice that one line system link can carry several VC-4 links. (Compare the situation in Figures 2a and 2b between the conduit and line systems layers.) Protected VC-4 routes require a primary and secondary line system route, i.e one VC-4 link requires two separate line system links. Respectively, the VC-4 layer carries VC-12 paths that are equal to 2Mbit/s paths from the granularity (frame size) viewpoint. In other words, VC-12s are created in the 2Mbit/s layer (4). The logical connections are defined in the logical, connection layer (5), i.e. 8-64 kbit/s connections are carried by the 2Mbit/s layer. The corresponding modules are conduit (conduit layer); line system (line system layer); VC-4 (VC-4 layer); 2Mbit/s (2Mbit/s layer); and cellular (logical connection layer) module.

Each layer uses resources (routing and capacity possibilities) from the layer below, and provides resources to the module above. Hence the main resource flow (11) (Figure 1) is from a layer to an adjacent layer only, intermediate layers are not bypassed. The possibility to exclude intermediate layers allows an incremental forming process. It is possible to develop an initial network with just two basic layers (for example logical connections and line systems), and gradually redefine the network by adding more network layers. For example, the VC-4 layer can be created afterwards in the case of Figure 1.

The resource flow between modules (layers) is an automatic operation. It can be said that the flow forms an input from the module above to the module below. The input to a module is the set of traffic requirements that need to be carried out by the module. The capacity calculations of a module create new traffic demands to the underlying modules. Let's see the resource flow from the transmission link (connection) point of view. When the traffic has been routed to a transmission link it is possible to calculate the capacity of the transmission link. Typically the link is transported in the underlying layers. The link thus becomes a traffic demand to the underlying layer, and so on. Additionally the nodes of the other modules might create new nodes within modules (e.g. a BTS node in the cellular module creates a transmission node in the transport module).

It follows from the above that the order of routing a network is basically.from the lowest layer to the highest. First, line systems are routed to conduits (I) (Figure 1), then VC-4s to line systems (II), 2Mbit/s /VC-12s to VC-4s (III) and finally logical connections to 2Mbit/s (IV). Routing combines the traffic demands and the topology of the module. The used routing algorithms and options are heavily dependent on the module, because different technologies have very different routing alternatives (e.g. packet switching in IP module vs. circuit switching in transport module). It is worth noting that the bottom module, representing the physical lines and nodes must contain all routes from the modules above (the layers above).

There is also implicit interactions (12) (Figure 1) in the other direction than the main resource flow. The multilayer routing commands take the routes in the underlying layers into account and thus constraining the routing. Similarily capacity limited routing commands propagate the capacity information implicitly up in the routing stack. The use of modules, i.e. layers is an iterative process.

Some of the key benefits of this arrangement is that the user can select which modules he wants to use and create all kinds of transport stacks. It is also possible to separate some traffic to one module and other traffic to another (e.g. 3G traffic to ATM modules, control traffic to IP module). It is also possible to combine traffic from different sources (convergence) to the same network. E.g. a common transport network can be used for traffic which arises from different sources.

A user selects a set of modules that is needed. The set is totally user modifiable. By using the modules the user can:
control the network level in detail; for example the user can route the logical connections to the transport module to get a rough picture of the transmission needs; for more detailed picture the user can take more modules, i.e. layers into use, for example, use all layers in Figure 1;
study different technical solutions; for example, the IP traffic can be routed either directly to WDM or to the SDH layers; the ATM links can be routed in the 2Mbit/s layer or in the STM-1 layer; it is also possible to have a tree like structure of convergence cases where a network layer is carrying traffic from multiple sources, as depicted in Figure 2.

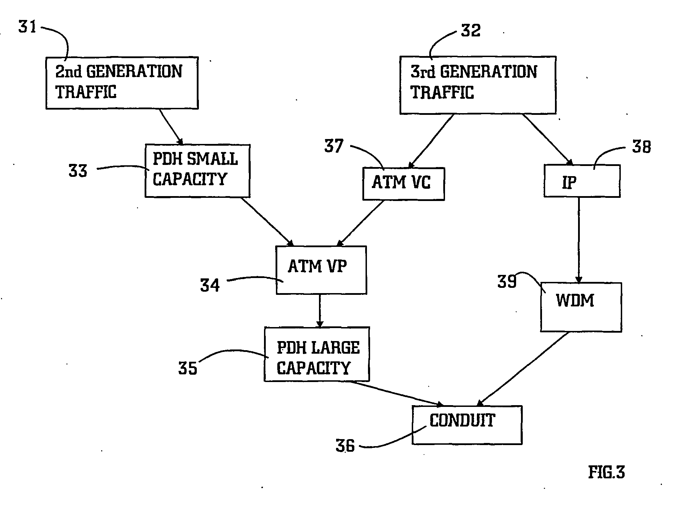

Figure 3 shows an example of how to combine different modules. The cellular network is desired to comprise both the second and third generation subnetworks. The cellular module can create logical connections (31,32) for both subnetworks. In the case of the second generation subnetwork the logical connections are carried by 2 Mbit/s PDH virtual links (33). These links are created in the 2 Mbit/s module. Respectively, the 2 Mbit/s PDH virtual links are carried by ATM virtual paths (34). These are created in the ATM virtual path module. The ATM virtual paths are carried by high capacity PDH links (35) (created in the ATM link module). and the high capacity PDH links must be placed into physical conduits (36), which are fixed in the conduit module.

In the case of the third generation subnetwork the logical connections are carried by ATM virtual circuits (37). These circuits are created in the ATM virtual circuit module. Respectively, the ATM virtual circuits are carried by ATM virtual paths (34). The ATM virtual paths are carried by high capacity PDH links (35), and the high capacity PDH links are placed into physical conduits (36). Another choice is to carry the third generation logical traffic in IP packets streams (28). The IP packet streams are created in the IP module. The IP packet streams can be carried in optical channels (39). The optical channels are created in the WDM module. The optical channels must be placed into fibers and physical conduits (36).

A matter worth noting is that some modules enable forming of several layers of the network. For example, the conduit module creates both the second and third generation layers.

Handling the entire forming process, is too complex without splitting it into smaller parts. However, the smaller parts must be logically connected together. To perform routing and other operations on a single layer at a time keeps the process tractable, while the layer interactions transfer relevant routing and operation results between layers. Interactions also offer an optimized structure for the whole network. The level of optimization can be improved by changing parameters within an iterative process. The user can concentrate his focus on a single layer, i.e. a module, at a time. The possibility to exclude intermediate modules allows an incremental forming process. Different technical solutions can be verified with each other.

Although the invention is described more or less in relation to the forming of a cellular network, it is evident that the invention can be used to form other communication networks as well. In other words, the invention can be used in other solutions in the scope of the inventive idea.

## Claims

1. An arrangement for forming a communications network, **characterized in that** the arrangement comprises a set of modules selected to form the network together, each module for handling forming of a functional level, each level representing a physical or logical part of the network concerning a specific technology, the network being modelled by several functional levels on top of one another and the set of the modules arranged to be one on top of another, each module in the set being adapted to interact with the module above by offering resources to it, and with the module below by using resources from it.

2. An arrangement according to claim 1, **characterized in that** the set of the modules in use are selectable depending on the network structure.

3. An arrangement according to claim 1 or 2, **characterized in that** a module is capable to form several physical or logical parts.

4. An arrangement according to claim 1, **characterized in that** routing is performed in a single module in the set at a time, and the interactions between modules in the set are adapted to transfer the routing performed for the use of other modules, in a way that the routes in the modules above the bottom module are found in the bottom module.

5. A method for forming a communications network, **characterized in that** method comprises the steps of: modelling the network into several functional levels on top of one another, each level representing a physical or logical part of the network concerning a specific technology,
forming each functional level in a specific module in a set of modules selected to form the network together, the set of modules arranged to be one on top of another,
each module in the set interacting with the module above by offering resources to it, and with the module below by using resources from it.

6. A method according to claim 5, **characterized in that** routing is performed in a single module at a time, and the interactions between modules transfer the routing performed for the use of other modules.

## Patentansprüche

1. Anordnung zum Bilden eines Kommunikationsnetzes, **dadurch gekennzeichnet, dass** die Anordnung einen Modulsatz umfasst, der ausgewählt ist, um zusammen das Netz zu bilden, wobei jedes Modul zum Steuern des Bildens einer Funktionsebene geeignet ist, wobei jede Ebene einen physikalischen oder logischen Teil des Netzes eine bestimmte Technologie betreffend darstellt, wobei das Netz durch verschiedene Funktionsebenen, eine auf der anderen, ausgebildet ist und der Modulsatz eingerichtet ist, einer auf dem anderen zu sein, wobei jedes Modul in dem Satz ausgelegt ist, mit dem Modul oberhalb, durch Anbieten von Ressourcen an es zu interagieren, und mit dem Module unterhalb, durch Verwenden von Ressourcen von ihm.

2. Anordnung nach Anspruch 1, **dadurch gekennzeichnet, dass** der Modulsatz im Betrieb in Abhängigkeit der Netzstruktur wählbar ist.

3. Anordnung nach Anspruch 1 oder 2, **dadurch gekennzeichnet, dass** ein Modul fähig ist, verschiedene physikalische oder logische Teile zu bilden.

4. Anordnung nach Anspruch 1, **dadurch gekennzeichnet, dass** Routing jeweils in einem einzelnen Modul in dem Satz ausgeführt wird und die Interaktionen zwischen Modulen in dem Satz ausgelegt sind, das Routing, das für die Verwendung anderer Module ausgeführt wurde, derart zu übertragen, dass die Routen in den Modulen oberhalb des Bodenmoduls in dem Bodenmodul gefunden werden.

5. Verfahren zum Bilden eines Kommunikationsnetzes, **dadurch gekennzeichnet, dass** das Verfahren die Schritte umfasst: Ausbilden des Netzes in verschiedenen Funktionsebenen, eine auf der anderen, wobei jede Ebene einen physikalischen oder logischen Teil des Netzes eine bestimmte Technologie betreffend darstellt,
Bilden jeder Funktionsebene in einem bestimmten Modul in einem Modulsatz der ausgewählt ist, um zusammen das Netz zu bilden, wobei der Modulsatz eingerichtet ist, einer auf dem anderen zu sein,
Interagieren jedes Moduls in dem Satz mit dem Modul oberhalb, durch Anbieten von Ressourcen an es, und mit dem Modul unterhalb, durch Verwenden von Ressourcen von ihm.

6. Verfahren nach Anspruch 5, **dadurch gekennzeichnet, dass** Routing jeweils in einem einzelnen Modul ausgeführt wird, und die Interaktionen zwischen den Modulen das Routing übertragen, das für die Verwendung anderer Module ausgeführt wurde.

## Revendications

1. Agencement permettant de former un réseau de communications, **caractérisé en ce que** l'agencement comprend un ensemble de modules sélectionnés pour former ensemble le réseau, chaque module étant destiné à gérer la formation d'un niveau fonctionnel, chaque niveau représentant une partie physique ou logique du réseau concernant une technologie spécifique, le réseau étant modelé par plusieurs niveaux fonctionnels au-dessus les uns des autres et l'ensemble des modules étant agencé pour être les au-dessus les uns des autres sur les autres, chaque module dans l'ensemble étant adapté pour interagir avec le module du dessus en lui offrant des ressources, et avec le module du dessous en en utilisant des ressources.

2. Agencement selon la revendication 1, **caractérisé en ce que** l'ensemble des modules utilisés peut être sélectionné en fonction de la structure du réseau.

3. Agencement selon la revendication 1 ou 2, **caractérisé en ce qu'**un module peut former plusieurs parties physiques ou logiques.

4. Agencement selon la revendication 1, **caractérisé en ce que** l'acheminement est réalisé dans un seul module de l'ensemble à la fois, et les interactions entre modules de l'ensemble sont adaptés pour transférer l'acheminement réalisé pour l'utilisation d'autres modules, de telle façon que les acheminements dans les modules au-dessus du module du fond se trouvent dans le module du fond.

5. Procédé pour former un réseau de communications, **caractérisé en ce que** le procédé comprend les étapes consistant à :
- modeler le réseau en plusieurs niveaux fonctionnels les uns sur les autres, chaque niveau représentant une partie physique ou logique du réseau concernant une technologie spécifique.
- former chaque niveau fonctionnel en un module spécifique dans un ensemble de modules sélectionnés pour former ensemble le réseau, l'ensemble des modules étant agencés pour être les uns au-dessus des autres,
chaque module dans l'ensemble interagissant avec le module du dessus en lui offrant des ressources, et avec le module du dessous en en utilisant des ressources.

6. Procédé selon la revendication 5, **caractérisé en ce que** l'acheminement est réalisé dans un seul module à la fois, et les interactions entre modules transfèrent l'acheminement réalisé pour l'utilisation d'autres modules.
